# DEMANDE DE BREVET EUROPEEN

(11) **EP 4 851 635 A1**
(43) Date de publication de la demande: **09.12.2026**
(21) Numéro de dépôt: 26179104.0
(22) Date de dépôt: 18.05.2026
(51) Int. Cl.: G01N 35/00, B01L 3/00, G01N 1/36, G01N 1/31

(54) **INSTALLATION ET PROCÉDÉ D'ASSISTANCE À LA MISE EN CASSETTES D'ÉCHANTILLONS BIOLOGIQUES**

(30) Priorité: 02.06.2025 FR 2505914
(71) Demandeur: Dreampath Diagnostics, 67100 Strasbourg (FR)
(72) Inventeur: JORDAN NAVAS, Pablo, 28016 Madrid (ES); WILHELM, Valérie, 67114 Eschau (FR)
(74) Mandataire: Hugues, Catherine

(57) **Abrégé**

La présente invention concerne uneinstallation d'assistance à la mise en cassettes par un opérateur d'échantillons biologiques stockés dans au moins un contenant, comportant une aire de mise en cassettes, une caméra, adaptée pour lire des données encodées et pour prélever au moins une image du contenu d'au moins un contenant et du contenu d'au moins une cassette placés côte à côte sur ladite aire, des moyens de genèse et d'impression de données encodées propres à un échantillon biologique destinées à être apposées sur une cassette, des moyens de transmission des données encodées lues et des images prélevées par la caméra vers des moyens de traitement informatiques intégrant une application logicielle exécutée pour identifier le type d'échantillon biologique déposé sur ladite aire, déclencher un protocole de mise en cassette(s) de l'échantillon, déclencher l'impression de données encodées, comparer, à partir des données encodées lues par la caméra, les données encodées apposées sur au moins un contenant et les données encodées apposées sur au moins une cassette disposés côte à côte sur ladite aire, activer des moyens de genèse d'un signal représentatif d'une absence de correspondance ou, le cas échéant, d'une correspondance, entre les données encodées apposées sur ledit au moins un contenant et les données encodées inscrites sur ladite au moins une cassette.

L'invention concerne également un procédé de mise en oeuvre d'une telle installation.

## Description

La présente invention concerne une installation et un procédé d'assistance à la mise en cassette d'échantillons biologiques destiné à une mise en œuvre au sein de laboratoires d'anatomie pathologique et cytologique.

De manière classique, la prise en charge médicale de certains patients implique le prélèvement de parties d'organes ou de tissus, de taille plus ou moins importante, dont l'analyse, comportant généralement une étape d'observation au microscope, permet l'établissement d'un diagnostic le plus précis possible.

Dans ce contexte, il est notoire qu'afin de permettre une parfaite visualisation au microscope des structures cellulaires ou tissulaires à analyser, de tels échantillons biologiques font l'objet d'une préparation préalable comportant de nombreuses étapes délicates, réalisées par différents intervenants, au moyen d'appareils et d'outils spécifiquement développés à cet effet.

De fait, de manière très résumée, lors de leur prélèvement, les échantillons biologiques frais sont tout d'abord placés dans des contenants remplis de formol, puis sont transférés individuellement, après description macroscopique, dans des cassettes ajourées, dans lesquelles ils subissent une phase de déshydratation, puis une phase d'inclusion en paraffine les transformant en blocs d'échantillons biologiques.

Ces derniers sont ensuite détaillés en coupes fines, qui sont elles-mêmes étalées sur des lames porte-objet, permettant une observation cellulaire au microscope, après différents traitements chimiques, notamment de conservation et de coloration.

Quoiqu'il en soit, toutes les étapes de préparation des échantillons biologiques en vue de leur analyse et l'établissement d'un diagnostic, supposent de nombreuses manipulations par des intervenants successifs, et par conséquent la mise en œuvre de mesures de contrôle pour garantir non seulement la fiabilité des analyses effectuées et leur exhaustivité, mais également une correspondance entre l'origine réelle des échantillons biologiques et celle qui leur est attribuée au fur et à mesure de leur parcours.

A ce propos, pour rappel, dès son prélèvement, chaque échantillon biologique se voit attribuer des données encodées spécifiques, fournies par le système informatique du laboratoire à l'œuvre.

Ces données encodées relient l'échantillon biologique au patient dont il provient, et doivent impérativement le suivre tout au long du processus permettant son analyse, qu'il soit stocké dans un pot, une cassette, un bloc de paraffine ou sur une lame porte-objet.

Afin d'éviter toute erreur d'attribution, un contrôle de la correspondance entre les données encodées apposées au fur et à mesure sur les différents supports de matériel biologique en provenance d'un même patient doit donc être effectué lors de la fabrication de chacun d'entre eux.

D'autre part, afin de garantir la prise en charge à des fins d'analyse, de la totalité du matériel biologique prélevé sur un patient, il est primordial de le déposer en totalité dans une ou, le cas échéant, plusieurs cassettes ajourées, et d'éviter tout éventuel oubli malencontreux dans le pot d'origine ou sur une paillasse.

Il est à noter qu'ultérieurement, cette même contrainte suppose en outre que la coupe déposée sur la lame porte-objet soit complète et représentative du matériel déposé dans la/les cassettes puis inclus en paraffine.

Ainsi, des contrôles, visant à garantir à la fois l'attribution correcte d'un matériel biologique et la prise en compte analytique de la totalité de celui-ci, doivent impérativement être effectués au fil du processus de préparation en vue d'une analyse, plus particulièrement lors de l'étape initiale de transfert, depuis le(s) contenant(s) rempli(s) de formol d'origine, vers la/les cassette(s) ajourée(s). A ce propos, il est d'ailleurs à noter que pour les petites pièces opératoires, les recommandations imposent d'ores et déjà que la mise en cassette s'effectue de manière protocolisée et tracée par imagerie.

Toutefois, il a été observé qu'actuellement les deux contrôles mentionnés ci-dessus sont réalisés essentiellement par simple contrôle visuel, ou éventuellement à l'aide de systèmes de gestion, s'avérant cependant peu fiables.

De toute évidence, toute éventuelle erreur, qu'elle soit d'origine humaine ou technique, peut non seulement se révéler préjudiciable pour l'établissement d'un diagnostic mais également conduire à une erreur d'attribution d'un diagnostic et donc à terme aboutir à des conséquences médicales majeures.

En d'autres termes, la manière de procéder actuelle pour effectuer les contrôles requis n'est pas satisfaisante car elle présente un caractère aléatoire, manuel et fastidieux, et s'accompagne fréquemment de problèmes de traçabilité, conduisant à des erreurs d'attribution de prélèvements biologiques.

De plus, elle peut conduire à des diagnostics de qualité médiocre, effectués à partir d'une fraction seulement du matériel prélevé, en cas de représentativité incomplète du prélèvement ou en cas de perte ou destruction intempestive de la fraction complémentaire.

L'objet de la présente invention est de proposer une solution permettant de pallier l'ensemble des problèmes décrits ci-dessus, en vue de garantir la fiabilité des diagnostics établis par les laboratoires de pathologie, aussi bien en termes de précision qu'en termes de destinataire.

Plus précisément, la présente invention a pour objectif de garantir une concordance entre les données encodées apposées sur le ou, le cas échéant les, contenant(s) d'origine d'un prélèvement biologique et celles apposées sur la/les cassettes ajourées auxquelles ce même prélèvement a conduit, et d'assurer que la totalité du matériel biologique prélevé chez un même patient est bien mise dans la/les cassette(s).

A cet effet, la présente invention concerne une installation d'assistance à la mise en cassettes d'échantillons biologiques par un opérateur, comportant :
- une aire de mise en cassettes d'échantillons biologiques, adaptée pour supporter au moins, disposés côte à côte, au moins un contenant dans lequel un échantillon biologique est stocké ainsi qu'au moins une cassette destinée à accueillir au moins une partie dudit échantillon biologique,
- une caméra montée sur un support proche de ladite aire, adaptée pour lire des données encodées apposées d'une part sur ledit au moins un contenant dans lequel un échantillon biologique est stocké et d'autre part sur au moins une cassette destinée à accueillir au moins une partie dudit échantillon biologique, et pour prélever au moins une image de l'échantillon biologique stocké dans ledit au moins un contenant et au moins une image d'au moins une portion de ce même échantillon biologique une fois placée dans ladite au moins une cassette, ledit au moins un contenant et ladite au moins une cassette étant disposés côte à côte sur ladite aire,
- des moyens de transmission des données encodées lues et des images prélevées par la caméra vers des moyens de traitement informatiques intégrant une application logicielle exécutée pour:
   * à partir des données encodées, apposées sur ledit au moins un contenant et sur ladite au moins une cassette disposés côte à côte sur ladite aire, et lues par la caméra, comparer les données encodées apposées sur ledit au moins un contenant et les données encodées inscrites sur ladite au moins une cassette placée sur ladite aire à côté dudit au moins un contenant ou sur l'étiquette apposée sur ladite au moins une cassette,
   * activer des moyens de genèse d'un signal représentatif d'une absence de correspondance ou, le cas échéant, d'une correspondance, entre les données encodées apposées sur ledit au moins un contenant et les données encodées imprimées sur ladite au moins une cassette placée sur ladite aire à côté dudit au moins un contenant ou sur l'étiquette apposée sur cette dernière,
caractérisée en ce que ladite caméra est montée pivotante sur ledit support et en ce qu'il comporte
- des moyens d'impression de données encodées sur au moins une cassette ou au moins une étiquette destinée à être apposée sur une cassette, les données encodées étant propres à un échantillon biologique stocké dans au moins un contenant disposé côte à côte avec ladite cassette sur ladite aire, tandis que l'application logicielle qu'intègrent les moyens de traitement informatique est également exécutée pour :
   * identifier le type d'échantillon biologique stocké dans au moins un contenant déposé sur ladite aire à partir des données encodées apposées sur ledit au moins un contenant et lues par la caméra,
   * déclencher un protocole de mise en cassette de l'échantillon biologique stocké dans ledit au moins un contenant déposé sur ladite aire, spécifique au type d'échantillon biologique identifié,
   * à partir des données encodées apposées sur ledit au moins un contenant déposé sur ladite aire et lues par la caméra, déclencher la genèse de données encodées propres à l'échantillon biologique stocké dans ledit au moins un contenant et leur impression sur au moins une cassette placée sur ladite aire à côté dudit au moins un contenant ou sur au moins une étiquette destinée à être apposée par un opérateur sur ladite au moins une cassette placée sur ladite aire à côté dudit au moins un contenant.

Par ailleurs, la présente invention a également pour objet un procédé d'assistance à la mise en cassettes d'échantillons biologiques par un opérateur au moyen d'une installation telle que décrite ci-dessus, comportant les étapes suivantes:
- lecture, au moyen de la caméra, des données encodées apposées sur au moins un contenant déposé sur ladite aire,
- prélèvement, au moyen de la caméra, d'au moins une image de l'échantillon biologique, maintenu dans ledit au moins un contenant ou directement déposé sur ladite aire,
- prélèvement, au moyen de la caméra, d'au moins une image dudit échantillon biologique ou d'une portion de celui-ci transvasé(e) dans au moins une cassette placée à côté dudit au moins un contenant sur ladite aire,

- lecture, au moyen de la caméra, des données encodées imprimées sur cette même cassette ou sur une étiquette apposée sur cette dernière,
- comparaison entre les données encodées apposées sur ledit au moins un contenant déposé sur ladite aire et les données encodées imprimées ou apposées via une étiquette sur ladite au moins une cassette déposée sur ladite aire à côté dudit au moins un contenant,
- émission d'un signal représentatif d'une absence de correspondance ou, le cas échéant, d'une correspondance, entre les données encodées apposées sur ledit au moins un contenant et les données encodées imprimées ou apposées sur ladite au moins une cassette placée sur ladite aire à côté dudit au moins un contenant,
caractérisé par la réalisation des étapes suivantes :
- identification, au moyen des données encodées lues sur ledit contenant, du type d'échantillon biologique stocké dans ledit au moins un contenant,
- genèse de données encodées propres audit échantillon biologique stocké dans ou issu dudit au moins un contenant, et impression de ces données encodées sur au moins une cassette destinée à être placée à côté dudit au moins un contenant sur ladite aire, ou sur au moins une étiquette destinée à être apposée sur une telle cassette,
- déclenchement d'un protocole de mise en cassette de l'échantillon biologique stocké dans ledit au moins un contenant déposé sur ladite aire, spécifique au type d'échantillon biologique identifié.

Ce même procédé peut encore être caractérisé par la réalisation de l'étape suivante :
- envoi des images prélevées par la caméra vers des moyens de traçabilité d'échantillons biologiques et/ou d'archivage de données relatives à des échantillons biologiques.

Conformément à l'invention, le présent procédé d'assistance à la mise en cassettes d'échantillons biologiques par un opérateur, peut en outre se caractériser par la réalisation des étapes suivantes :
- prélèvement, au moyen de la caméra, d'au moins une image du contenu dudit au moins un contenant, une fois l'échantillon biologique ou une portion de celui-ci transvasé(e) dans au moins une cassette, placée sur ladite aire à côté dudit au moins un contenant.

Tel qu'évoqué ci-dessus, la présente invention a pour objet une installation et un procédé d'assistance à la mise en cassettes d'échantillons biologiques stockés, lors de leur prélèvement, dans des contenants adaptés à leur taille, tels que par exemple, des pots d'échantillonnage munis d'un couvercle.

Plus précisément, en pratique, de tels pots d'échantillonnage peuvent, selon le cas, contenir chacun plusieurs biopsies prélevées auprès d'un même patient, qui seront, selon le type d'examen à effectuer, regroupées dans une seule et même cassette ajourée ou disposer séparément chacune dans une cassette. Ou, à l'inverse, ils peuvent contenir une pièce opératoire trop volumineuse pour être déposée dans une seule cassette, qui devra être découpée selon un protocole dédié en plusieurs fragments répartis ensuite dans différentes cassettes. Le cas échéant, le prélèvement biologique effectué auprès d'un même patient peut également être stocké dans plusieurs pots et donner lieu ensuite à la fabrication d'une unique cassette.

Par ailleurs, de manière classique, des données encodées, représentatives du patient concerné et du type d'organe, sont attribuées dès leur prélèvement à l'ensemble des échantillons biologiques destinés à la réalisation d'analyses et/ou à l'établissement de diagnostics, et vont les accompagner tout au long de leur parcours à travers les différents services susceptibles d'intervenir, quel que soit le type de support sur lequel ils sont stockés.

Ainsi, chaque contenant est muni de telles données encodées, se présentant par exemple sous forme de code matriciel ou de code-barres, et qui doivent se retrouver ultérieurement à l'identique, sur les cassettes ajourées, qui donneront lieu aux blocs de paraffine et aux lames porte-objet renfermant le matériel biologique d'un même patient.

Il va de soi qu'en cas de prélèvement de matériel biologique de grande dimension, l'ensemble des cassettes ajourées, intégrant chacune une fraction de ce même matériel provenant d'un seul et même patient, sont supposées porter des données encodées identiques.

En somme, afin de garantir l'émission d'un diagnostic vers le patient à l'origine d'un prélèvement biologique, les données encodées apposées sur la/les cassette(s) ajourée(s) renfermant l'intégralité de ce prélèvement biologique doivent nécessairement correspondre aux données encodées apposées sur le(s) contenant(s) d'origine.

De même, l'émission d'un diagnostic précis suppose la prise en compte effective de l'ensemble du matériel biologique prélevé.

La mise en œuvre de l'installation et du procédé selon l'invention lors du transvasement d'un prélèvement biologique depuis un/des contenant(s) d'origine vers une/des cassette(s) ajourée(s) permet d'éviter toute apposition de données encodées erronées sur ces dernières et de garantir la prise en charge de la totalité des prélèvements réalisés sur une pièce opératoire, d'un tissu, ou de la partie d'organe prélevée.

En somme, la mise en œuvre de l'installation et du procédé selon l'invention immédiatement lors de la fabrication de cassettes ajourées et donc de blocs d'échantillons biologiques permet de ne mettre ultérieurement à disposition des pathologistes en charge des analyses que des lames porte-objet préparées avec l'ensemble du matériel biologique prélevé sur un même patient et portant des données encodées dont la correspondance avec celles reliées à ce même patient a été préalablement contrôlée.

A cet effet, conformément à l'invention, l'installation d'assistance à la mise en cassettes d'échantillons biologiques par un opérateur, comporte avantageusement une aire de mise en cassettes d'échantillons biologiques, dont les dimensions et la structure sont spécifiquement conçues pour accueillir au moins, disposés côte à côte, au moins un contenant dans lequel un échantillon biologique est stocké ainsi qu'au moins une cassette destinée à accueillir au moins une partie dudit échantillon biologique.

Une telle aire peut par exemple être définie par une tablette indépendante pouvant être déposée sur ou intégrée à une paillasse, et de préférence amovible pour faciliter, le cas échéant, son nettoyage, voire son transport et son déplacement vers une zone de travail différente.

Par ailleurs, l'installation selon l'invention est également équipée d'une caméra montée pivotante sur un support proche de l'aire de mise en cassettes, et adaptée à la fois pour lire des données encodées et prélever des images à partir d'éléments disposés côte à côte sur ladite aire.

Plus précisément, la caméra dont l'installation selon l'invention est équipée est adaptée pour lire des données encodées apposées d'une part sur au moins un contenant dans lequel un échantillon biologique est stocké et d'autre part sur au moins une cassette destinée à accueillir au moins une partie dudit échantillon biologique, mais également pour prélever une ou plusieurs image(s) de l'échantillon biologique stocké dans le/les contenant(s) et une ou plusieurs image(s) d'au moins une portion de ce même échantillon biologique placée dans la/les cassette(s), le/les contenant(s) et la/les cassette(s) étant disposés côte à côte sur ladite aire.

Avantageusement, il peut en outre s'agir d'une caméra intelligente, équipée de moyens de reconnaissance de formes et de tailles, lui permettant de calculer le nombre et la taille des fragments présents sur ladite aire de mise en cassettes.

Il est en outre à noter qu'une telle caméra est avantageusement montée pivotante sur un support, tel que par exemple un châssis surplombant ladite aire ou proche de cette dernière. Selon une autre variante avantageuse envisageable, elle peut également être intégrée, montée pivotante, dans une paire de lunettes destinée à être portée par un opérateur.

Conformément à l'invention, l'installation comporte par ailleurs des moyens de transmission des données encodées lues et des images prélevées par la caméra vers des moyens de traitement informatiques intégrant une application logicielle exécutée pour:
* identifier le type d'échantillon biologique stocké dans au moins un contenant déposé sur ladite aire à partir des données encodées apposées sur ledit au moins un contenant et lues par la caméra,
* déclencher un protocole de mise en cassette(s) de l'échantillon biologique stocké dans ledit au moins un contenant déposé sur ladite aire, spécifique au type d'échantillon biologique identifié,
* à partir des données encodées apposées sur ledit au moins un contenant déposé sur ladite aire et lues par la caméra, déclencher la genèse, par des moyens dédiés, de données encodées propres à l'échantillon biologique, et de leur impression sur une/des cassette(s), ou sur une/des étiquette(s) destinée(s) à être apposée(s) par un opérateur sur une/des cassette(s) placée(s) sur ladite aire à côté du/des contenant(s),
* à partir des données encodées, apposées sur ledit au moins un contenant et sur ladite au moins une cassette déposés sur ladite aire, et lues par la caméra, comparer les données encodées apposées sur ledit au moins un contenant et les données encodées inscrites sur ladite au moins une cassette placée sur ladite aire à côté dudit contenant,
* activer des moyens de genèse d'un signal représentatif d'une absence de correspondance ou, le cas échéant, d'une correspondance, entre les données encodées apposées sur ledit au moins un contenant et les données encodées inscrites sur ladite au moins une cassette placée sur ladite aire à côté dudit au moins un contenant.

En pratique, comme mentionné précédemment, l'installation selon l'invention est destinée à être utilisée dans le but d'assister un opérateur lors de la mise en cassettes ajourées d'échantillons biologiques issus des contenants dans lesquels ils ont été placés lors de leur prélèvement.

Après une étape de lancement de cette installation au travers d'une entrée des données d'identification de l'opérateur dans les moyens de traitement informatiques, son procédé de mise en œuvre suppose, pour un prélèvement biologique émanant d'un seul et même patient, stocké selon sa taille dans un ou plusieurs contenants et destiné à la fabrication d'une ou plusieurs cassettes, la réalisation des étapes suivantes:
- lecture, au moyen de la caméra, des données encodées apposées sur un/des contenant(s) déposé(s) sur ladite aire,
- identification du type d'échantillon biologique stocké dans ce/ces contenant(s), de sorte à provoquer le déclenchement d'un protocole de travail à destination de l'opérateur,
- après ouverture, le cas échéant, du couvercle fermant le contenant, prélèvement, au moyen de la caméra, d'au moins une image de l'échantillon biologique, maintenu dans ce même contenant ou directement déposé sur ladite aire,
- à partir de la reconnaissance des données encodées apposées sur le/les contenant(s), genèse et impression de données encodées correspondantes sur une, voire plusieurs cassette(s) ou étiquette(s) destinée(s) à être apposée(s) par l'opérateur sur une/des cassette(s),
- après le transvasement de l'échantillon biologique, dans sa totalité ou non, dans la/les cassette(s) correspondantes, prélèvement, au moyen de la caméra, d'au moins une image dudit échantillon biologique ou d'une portion de celui-ci transvasé(e) dans la/les cassette(s) placée(s) à côté du/des contenant(s) sur ladite aire,
- lecture, au moyen de la caméra, des données encodées imprimées sur l'étiquette apposée ou imprimées directement sur la/les cassette(s), et fermeture de la/les cassette(s) par l'opérateur,
- le cas échéant, au cas où une partie de l'échantillon biologique a été replacée ou est restée dans son contenant d'origine, prélèvement, au moyen de la caméra, d'au moins une image du contenu résiduel du contenant,
- comparaison entre les données encodées apposées sur le/les contenant(s) déposé(s) sur ladite aire et les données encodées apposées sur la/les cassette(s) déposée(s) sur ladite aire à côté du/des contenant(s),
- émission d'un signal représentatif d'une absence de correspondance ou, le cas échéant, d'une correspondance, entre les données encodées apposées sur le/les contenant(s) et les données encodées inscrites sur la/les cassette(s) placée(s) sur ladite aire à côté dudit contenant ou sur l'étiquette apposée sur la/les cassette(s).

En outre, le procédé d'assistance à la mise en cassettes d'échantillons biologiques par un opérateur selon l'invention peut également être complété par la réalisation d'une étape d'envoi des images prélevées par la caméra vers des moyens de traçabilité d'échantillons biologiques et/ou d'archivage de données relatives à des échantillons biologiques, qui permettront leur visualisation ultérieure par un praticien, en particulier par le médecin pathologiste lors de l'étape d'interprétation microscopique. A ce stade, l'image prélevée du contenu d'une cassette pourra en outre être comparée à l'image de la coupe correspondante étalée sur une lame, soit de manière visuelle par le praticien à l'oeuvre, soit par des moyens de traitements d'image. Cette comparaison ayant pour objectif de s'assurer que la totalité du contenu d'une cassette est présente et visible sur le ruban de paraffine correspondant étalé sur une lame, ou, si tel n'est pas le cas, de permettre au praticien de demander qu'une coupe additionnelle soit réalisée et étalée sur une nouvelle lame, permettant d'analyser la fraction manquante sur la première lame.

## Revendications

1. Installation d'assistance à la mise en cassettes d'échantillons biologiques par un opérateur, comportant :
- une aire de mise en cassettes d'échantillons biologiques, adaptée pour supporter au moins, disposés côte à côte, au moins un contenant dans lequel un échantillon biologique est stocké ainsi qu'au moins une cassette destinée à accueillir au moins une partie dudit échantillon biologique,
- une caméra montée sur un support proche de ladite aire, adaptée pour lire des données encodées apposées d'une part sur ledit au moins un contenant dans lequel un échantillon biologique est stocké et d'autre part sur au moins une cassette destinée à accueillir au moins une partie dudit échantillon biologique, et pour prélever au moins une image de l'échantillon biologique stocké dans ledit au moins un contenant et au moins une image d'au moins une portion de ce même échantillon biologique une fois placée dans ladite au moins une cassette, ledit au moins un contenant et ladite au moins une cassette étant disposés côte à côte sur ladite aire,
- des moyens de transmission des données encodées lues et des images prélevées par la caméra vers des moyens de traitement informatiques intégrant une application logicielle exécutée pour :
* à partir des données encodées apposées sur ledit au moins un contenant et sur ladite au moins une cassette disposés côte à côte sur ladite aire et lues par la caméra, comparer les données encodées apposées sur ledit au moins un contenant et les données encodées inscrites sur ladite au moins une cassette placée sur ladite aire à côté dudit au moins un contenant ou sur l'étiquette apposée sur ladite au moins une cassette,
* activer des moyens de genèse d'un signal représentatif d'une absence de correspondance ou, le cas échéant, d'une correspondance, entre les données encodées apposées sur ledit au moins un contenant et les données encodées imprimées sur ladite au moins une cassette placée sur ladite aire à côté dudit au moins un contenant ou sur l'étiquette apposée sur cette dernière,
**caractérisé en ce que** ladite caméra est montée pivotante sur ledit support, et **en ce qu'**il comporte
- des moyens d'impression de données encodées sur au moins une cassette ou au moins une étiquette destinée à être apposée sur une cassette, les données encodées étant propres à un échantillon biologique stocké dans au moins un contenant disposé côte à côte avec ladite cassette sur ladite aire, tandis que l'application logicielle qu'intègrent les moyens de traitement informatique est également exécutée pour :
* identifier le type d'échantillon biologique stocké dans au moins un contenant déposé sur ladite aire à partir des données encodées apposées sur ledit au moins un contenant et lues par la caméra,
* déclencher un protocole de mise en cassette de l'échantillon biologique stocké dans ledit au moins un contenant déposé sur ladite aire, spécifique au type d'échantillon biologique identifié,
* à partir des données encodées apposées sur ledit au moins un contenant déposé sur ladite aire et lues par la caméra, déclencher la genèse de données encodées propres à l'échantillon biologique stocké dans ledit au moins un contenant et leur impression sur au moins une cassette placée sur ladite aire à côté dudit au moins un contenant ou sur au moins une étiquette destinée à être apposée par un opérateur sur ladite au moins une cassette placée sur ladite aire à côté dudit au moins un contenant.

2. Procédé d'aide à la mise en cassettes sécurisée d'échantillons biologiques par un opérateur au moyen d'une installation selon la revendication 1, comportant les étapes suivantes :
- lecture, au moyen de la caméra, des données encodées apposées sur au moins un contenant déposé sur ladite aire,
- prélèvement, au moyen de la caméra, d'au moins une image de l'échantillon biologique, maintenu dans ledit au moins un contenant ou directement déposé sur ladite aire,
- prélèvement, au moyen de la caméra, d'au moins une image dudit échantillon biologique ou d'une portion de celui-ci transvasé(e) dans au moins une cassette placée à côté dudit au moins un contenant sur ladite aire,
- lecture, au moyen de la caméra, des données encodées imprimées sur cette même cassette ou sur une étiquette apposée sur cette dernière,
- comparaison entre les données encodées apposées sur ledit au moins un contenant déposé sur ladite aire et les données encodées imprimées ou apposées via une étiquette sur ladite au moins une cassette déposée sur ladite aire à côté dudit au moins un contenant,
- émission d'un signal représentatif d'une absence de correspondance ou, le cas échéant, d'une correspondance, entre les données encodées apposées sur ledit au moins un contenant et les données encodées imprimées ou apposées sur ladite au moins une cassette placée sur ladite aire à côté dudit au moins un contenant,
**caractérisé par** la réalisation des étapes suivantes :
- identification, au moyen des données encodées lues sur ledit contenant, du type d'échantillon biologique stocké dans ledit au moins un contenant,
- genèse de données encodées propres audit échantillon biologique stocké dans ou issu dudit au moins un contenant, et impression de ces données encodées sur au moins une cassette destinée à être placée à côté dudit au moins un contenant sur ladite aire, ou sur au moins une étiquette destinée à être apposée sur une telle cassette,
- déclenchement d'un protocole de mise en cassette de l'échantillon biologique stocké dans ledit au moins un contenant déposé sur ladite aire, spécifique au type d'échantillon biologique identifié.

3. Procédé d'aide à la mise en cassettes sécurisée d'échantillons biologiques par un opérateur selon la revendication 2, **caractérisé par** la réalisation de l'étape suivante :
- envoi des images prélevées par la caméra vers des moyens de traçabilité d'échantillons biologiques et/ou d'archivage de données relatives à des échantillons biologiques.

4. Procédé d'aide à la mise en cassettes sécurisée d'échantillons biologiques par un opérateur selon l'une des revendications 2 ou 3, **caractérisé par** la réalisation des étapes suivantes :
- prélèvement, au moyen de la caméra, d'au moins une image du contenu dudit au moins un contenant, une fois l'échantillon biologique ou une portion de celui-ci transvasé(e) dans au moins une cassette, placée sur ladite aire à côté dudit au moins un contenant.
